# EUROPÄISCHE PATENTANMELDUNG

(11) **EP 4 682 503 A1**
(43) Veröffentlichungstag der Anmeldung: **21.01.2026**
(21) Anmeldenummer: 25189916.7
(22) Anmeldetag: 16.07.2025
(51) Int. Cl.: G01N 1/22, G01N 1/24, G01N 1/40, G01N 15/06, G01N 15/01, G01N 21/77, B04B 5/00

(54) **ZENTRIFUGE, NACHWEISGERÄT SOWIE EIN NACHWEISVERFAHREN FÜR IN LUFT ENTHALTENE PATHOGENE SUBSTANZEN**

(30) Priorität: 16.07.2024 DE 102024206684
(71) Anmelder: HAGER SAFETY Deutschland GmbH, 66440 Blieskastel (DE)
(72) Erfinder: Viertel, Tobias, 65527 Niedernhausen (Niederseelbach) (DE); Kroh, Christoph, 65510 Idstein (DE); Legris, Yves, 55291 Saulheim (DE)
(74) Vertreter: WSL Patentanwälte Partnerschaft mbB

(57) **Zusammenfassung**

Die Erfindung betrifft ein Verfahren, eine Zentrifuge und eine Nachweisvorrichtung zum Nachweis in Luft enthaltener pathogener Substanzen. Das Verfahren umfasst die Schritte: Durchleiten von Luft durch einen Spaltraum (124) einer Zentrifuge (110), Zentrifugieren der durchgeleiteten Luft, Spülen des Spaltraums (124) mittels eines ersten Volumens einer Spülflüssigkeit, Auffangen der aus dem Spaltraum (124) austretenden Spülflüssigkeit, Einleiten der aufgefangenen Spülflüssigkeit in einen Nachweisbereich (118), Detektieren einer Trübung und/oder Färbung und/oder Lumineszenz in dem Nachweisbereich (118) in Abhängigkeit von der Präsenz wenigstens einer pathogenen Substanz und mittelbar oder unmittelbar infolge eines In-Kontakt-Bringens derselben mit Nachweis-Antikörpern. Die Zentrifuge (110) definiert eine Rotationsachse (A), und umfasst zwei um diese drehbare Umfangswände zwischen denen der Spaltraum (124) ausgebildet ist, einen Rotationsantrieb, Mittel zum Durchleiten von Luft durch den Spaltraum (124), Mittel (134) zum Einleiten einer Spülflüssigkeit in den Spaltraum (124) und Mittel (126) zum Auffangen der aus dem Spaltraum (124) austretenden Spülflüssigkeit.

## Beschreibung

Die Erfindung betrifft ein Nachweisverfahren für den vorzugsweise quantitativen Nachweis in Luft enthaltener pathogener Substanzen, eine Zentrifuge zur Verwendung in einem Nachweisgerät und eine Nachweisgerät zum Ausführen des Nachweisverfahren. Unter "pathogener Substanz" werden hierin solche Substanzen verstanden, die ein Antigen aufweisen, also insbesondere Viren.

Der in situ-Nachweis pathogener Substanzen in der Raum- und Atem luft, sogenannter Aerosolpartikel, ist seit langem Gegenstand der Forschung und hat nicht zuletzt durch die pandemischen Folgen des in Erscheinung getretenen SARS-CoV-2 Virus noch einmal besonders an Fahrt aufgenommen. In Folge dessen gibt es zahlreichen auch jüngeren Stand der Technik. Beispielhaft wird auf folgende Schriften verwiesen.

Das Dokument CN 11 1662816 A offenbart eine Anordnung, die Raumluft ansaugt, in einem Anreicherungsbehälter Viren herausfiltert und diese zusammen mit einer Pufferlösung zu einem mikrofluidischen Chip leitet, in dem unter Temperaturkontrolle eine biochemische Reaktion (LAMP) stattfindet und mittels optischer Verfahren nachgewiesen wird.

Aus der US 2020/0309703 A1 ist ein Aerosoldetektor bekannt, der auf einer Fluoreszenzanregung von schädlichen Aerosolpartikeln, insbesondere auch SARS-CoV-2 Viren, mittels UV-Strahlung basiert. Die Partikel werden durch elektrostatische Kraft oder einfach durch die Gravitationskraft auf einer transparenten Platte aufgefangen und gehalten. Die Platte ist mittels UV-LED hinterleuchtet. Fluoreszenz wird durch Betrachten der Platte wahrgenommen oder kann mittels einem nicht näher beschriebenen Detektor erfasst werden. Bei Erfassen von Fluoreszenzstrahlung kann ein Alarm ausgelöst werden.

Aus der WO 2008/108872 A2 ist ein Detektor zum Nachweisen unterschiedlicher bioaktiver Substanzen, unter anderem von Influenza Typ A-Viren bekannt. Der Nachweis bestimmter Antigene erfolgt mittels Antikörperreaktion. Ein Sensorelement ist zu diesem Zweck mit dem Antikörper Ligand beschichtet. Gemessen wird wahlweise ein für die Reaktion charakteristischer elektrostatischer Puls mittels einer Elektrode (bio pore sensor) oder eine charakteristische Fluoreszenz mittels Photodetektor (optical based sensor).

Die US 7,265,669 B2 behandelt eine selbstregenerierende Kollektorplatte für nachzuweisende Partikel. Als Nachweispartikel sind unter anderem auch Viren genannt. Zum Detektionsverfahren wird erwähnt, dass die Vorrichtung eine Anregungslichtquelle und einen Photodetektor für Fluoreszenzlicht umfasst. Der Detektor kann zwecks Raumluftüberwachung an der Wand oder Decke montiert werden.

In der Schrift US 7,494,769 B2 werden abermals Bioaerosole mittels Fluoreszenz- oder Phosphoreszenzmessung detektiert. Die Raumluft wird zu einem Kollektor gepumpt. Eine Besonderheit ist ein Kollektor mit Flüssigkeitsreservoir, in dem die Aerosole gefangen und konzentriert werden.

In dem Dokument CN 11 1665356 A geht es spezifisch um den Nachweis von Covid-19-Viren. Das labortechnische Analyseverfahren basiert auf der Raman-Spektroskopie, genauer surface enhanced Raman Spectroscopy (SERS). Analysiert werden Fluidproben, die beispielsweise aus einem konzentrierten Aerosol bestehen können. Für die SERS werden Silber- oder Goldoberflächen verwendet, die mit Antikörpern funktionalisiert werden.

Die WO 2006/106235 A1 hat eine Vorrichtung und ein automatisiertes Nachweisverfahren für mikrobiologisches Material, unter anderem Viren, zum Gegenstand, bei dem ein Aerosol angesaugt zu einer Probe aufkonzentriert und einer Anordnung von Testscheiben zugeführt wird, die in Testzonen mit Antikörpern beschichtet sind. Eine Reaktion verursacht eine Verfärbung der Testzone, welche automatisch optisch ausgelesen und einem Auswertesystem zugeführt wird. Abgesehen von einer automatischen Auslesung erinnert die Nachweismethode an die aus den Schnelltests bekannte Immunfärbung.

Dem Dokument CN 11 0118711 B zufolge, wird die bakterielle Belastung der Raumluft anhand von Fluoreszenzmessungen unter Berücksichtigung verschiedener Umgebungsbedingungen ermittelt. Die darin beschriebene Vorrichtung ist geeignet infolge der Detektion ein Warnsignal auszugeben.

In der CN 20 7516253 U ist eine Vorrichtung zum Nachweis von Hepatitis-B-Viren in der Luft offenbart. Die Vorrichtung saugt Luft in ein Gehäuse ein und leitet sie in eine dort befindliche Testflüssigkeit. Die Flüssigkeit wird über ein Kanalsystem auf mehrere Teststreifen aufgebracht und die Teststreifen können durch Fenster in der Gehäusewand beobachtet werden.

Auch die Schrift CN 21 0720420 U befasst sich mit dem Nachweis pathogener Substanzen in der Luft mittels Antikörpern, die auf einem Harz aufgetragen sind, und mit dem Stopfbuchsen gefüllt sind.

Eine andere Vorrichtung zum Erkennen bioaktiver Substanzen in der Luft ist aus der Schrift EP 1 309 720 B1 bekannt. Die Vorrichtung umfasst einen Einlass, einen Filter zum Herausfiltern von Staub und größeren Partikeln, eine Fluidleitung mit einer Barriere, an der sich ein Wirbel zum Sortieren von Partikeln nach Größe bildet, und eine Biorezeptorfläche, auf der die Partikel auftreffen und die mit einem Aptamer zum Nachweis bestimmter Substanzen durch Bindung versehen ist. Auch hier wird die Reaktion anhand von Fluoreszenzstrahlung optisch erfasst.

Wie in der Schrift zuvor hat auch die US 2019/0242807 A1 eine Vorrichtung und ein Verfahren zum schnellen in situ-Nachweis von Pathogenen, insbesondere Viren, in der Raumluft mittels Aptamer zum Gegenstand. Die Vorrichtung saugt Luft an, reinigt diese von Partikeln und reichert sie in einer Pufferlösung an. Diese wird in eine Detektionskammer gepumpt, die eine mit einem Aptamer funktionalisierte Elektrode aufweist. Parallel zu einer Vielzahl von Detektionskammern sind Gegenelektroden angeordnet. Der Nachweis von Pathogenen erfolgt anhand einer charakteristischen elektronischen Antwort auf ein dazwischen angelegtes elektrisches Feld.

In der EP 1 882 177 B1 ist die Reaktion eines luftgetragenen Partikels mit einem "Reporter" beschrieben, die nach erfolgter Reaktion in einer Detektionszone mit Licht bestrahlt werden. Als Reaktion werden Fluoreszenz, Phosphoreszenz etc. genannt. Der Reporter ist ein fluoreszierendes oder phosphoreszierendes Molekül, welches an ein Antigen gebunden sein kann.

In der Schrift US 10,677,773 B2 geht es allgemein um eine miniaturisierte Vorrichtung zur Überwachung der Umgebungsluft. Ein Virusdetektor ist beispielhaft genannt. Es geht dabei inhaltlich im Wesentlichen um die räumliche Anordnung von Pumpen, Kanälen, Sensoren, Stromversorgung etc. in der Vorrichtung.

Die US 7,705,739 B2 offenbart ein Analyse- und Warnsystem für eine mehrstufige Detektion verschiedener pathogener Stoffe, u. a. Viren, in der Luft. Das System umfasst ein optisches Detektionsmodul, welches für eine Lumineszenzmessung bestimmt ist.

Die Schrift EP 1 158 292 B1 befasst sich mit einem Aerosolpartikeldetektor basierend auf einer winkelaufgelösten Streulichtmessung unter Inzidenz eines Laserstrahls.

Ähnlich befasst sich auch die US 7,053,783 B2 mit einem Streulichtdetektor, speziell zur Ermittlung pathogener Partikel in der Luft. Ermittelt wird allein die Pulshöhe der Streulichtsignale, die jeweils einer Partikelgröße zugeordnet wird, wobei aus dem Auftreten bestimmter Größen auf das Vorhandensein pathogener Substanzen geschlossen wird.

Aus der KR 101625133 B1 ist ein Luftqualitätsmesssystem mit vernetzten Detektoren bekannt, das geeignet sein soll, verschiedene Arten von Luftverunreinigungen festzustellen und zu alarmieren, falls bestimmte Grenzwerte überschritten sind. Unter anderem sind auch Viren als Verunreinigungen genannt. Der Schwerpunkt der Schrift liegt in der Vernetzung. Über die Detektion ist aus den übersetzten Ausschnitten nichts ausgesagt.

Die Anmelderin hat selbst verschiedene Verfahren zum Einfangen, Aufkonzentrieren und Nachweisen pathogener Substanzen in der Atemluft untern den Aktenzeichen DE 10 2021 111 494 A, DE 10 2021 126 8181 A und DE 10 2022 132 609 A veröffentlicht.

Aufgabe der vorliegenden Erfindung ist es, ein alternatives verlässliches Nachweisgerät für den in situ-Nachweis in Luft enthaltener pathogener Substanzen bereitzustellen, das aus einfachen Komponenten aufgebaut ist, und verschiedene Anwendungsmöglichkeiten eröffnet.

Die Aufgabe wird gemäß einem ersten Aspekt der Erfindung gelöst durch ein Nachweisverfahren nach Anspruch 1.

Das erfindungsgemäße Verfahren zum Nachweis in Luft enthaltener pathogener Substanzen, insbesondere Viren, weist auf:
- Ein Durchleiten von Luft durch einen Spaltraum einer Zentrifuge,
- ein Zentrifugieren der durchgeleiteten Luft,
- ein Spülen des Spaltraums mittels eines ersten Volumens einer Spülflüssigkeit,
- ein Auffangen der aus dem Spaltraum austretenden Spülflüssigkeit und
- ein Einleiten der aufgefangenen Spülflüssigkeit in einen Nachweisbereich,
- ein Detektieren einer Trübung und/oder Färbung und/oder Lumineszenz in dem Nachweisbereich in Abhängigkeit von der Präsenz wenigstens einer pathogenen Substanz und mittelbar oder unmittelbar infolge eines In-Kontakt-Bringens derselben mit Nachweis-Antikörpern.

Eine Zentrifuge ist bekanntlich ein Mittel zum Trennen von Stoffen und wird erfindungsgemäß zum Trennen von Aerosolpartikeln oder -teilchen oder -tröpfchen und der diese transportierenden Luft genutzt. Die Aerosolpartikel werden beim Zentrifugieren aufgrund der Zentrifugalkraft unter Ausnutzung der Massenträgheit nach außen beschleunigt und entlang einer Innenoberfläche einer äußeren Umfangswand der Zentrifuge, welche den Spaltraum radial außen begrenzt, angereichert. Beim Spülen des Spaltraums mittels des ersten Volumens der Spülflüssigkeit werden die Aerosolpartikel von der Innenoberfläche mitgerissen, am Auslass der Zentrifuge aufgefangen und in den Nachweisbereich transportiert.

Als Spülflüssigkeit kommen beispielsweise Wasser oder Lösungen auf Basis von Wasser in Betracht, welche ferner Puffersubstanzen, Lösungsvermittler und dergleichen enthalten können.

Zwecks Nachweises von Antigenen bzw. einer pathogenen Substanz werden die Antigene mit Nachweis-Antikörpern in dem Nachweisbereich in Kontakt gebracht. Bevorzugt erfolgt das In-Kontakt-Bringen der pathogenen Substanz mit den Nachweis-Antikörpern, indem die Nachweis-Antikörper wahlweise zusammen mit der aufgefangenen Spülflüssigkeit in den Nachweisbereich eingeleitet werden oder indem nach dem Einleiten der aufgefangenen Spülflüssigkeit und vor dem Detektieren eine die Nachweis-Antikörper enthaltenden Flüssigkeit in den Nachweisbereich eingeleitet wird. Beide Varianten werden unter der Bezeichnung "Einleiten der Nachweis-Antikörper" zusammengefasst. Die Nachweis-Antikörper können in der ersten Variante schon vor dem Spülen in der Spülflüssigkeit enthalten sein oder dem Nachweisbereich gleichzeitig mit der Spülflüssigkeit in Form einer separaten Flüssigkeit zugeführt werden.

Die Nachweis-Antikörper docken beim In-Kontakt-Bringen an die Antigene der pathogenen Substanz an.

Gemäß einer ersten Alternative des Verfahrens wird unmittelbar infolge des In-Kontakt-Bringens der pathogenen Substanz bzw. der Antigene mit den Nachweis-Antikörpern eine Nachweisflüssigkeit gebildet, die aufgrund einer biochemischen Reaktion der pathogenen Substanz mit den Nachweis-Antikörpern eintrübt. Diese Ausführungsform beruht auf der Bildung eines Immunpräzipitats, das zu einer Verklumpung und anschließender Fällung aus der Flüssigkeit führt. Das Detektieren umfasst in diesem Fall das Messen von Lichtstreuung oder von Lichtabsorption.

Alternative Ausgestaltungen des Verfahrens beruhen auf der Verwendung von Reportermolekülen, insbesondere Enzyme oder Fluorophore, auch Markierung oder Marker bezeichnet, welche direkt oder indirekt an die Nachweis-Antikörper angebunden sind. Die Reportermoleküle treten bei einem In-Kontakt-Bringen mit einem dazu passenden Substrat, das beispielsweise von dem Enzym umgesetzt werden kann, in eine biochemische Reaktion ein, die eine detektierbare Färbung oder Lumineszenz bzw. Fluoreszenz zur Folge hat, oder sie stehen zur Abgabe einer Fluoreszenzstrahlung infolge einer Exposition mit einer Anregungsstrahlung bereit. Infolge des In-Kontakt-Bringens der pathogenen Substanz bzw. der Antigene mit den Nachweis-Antikörpern wird also eine Nachweisflüssigkeit gebildet, in der die Antigen-Antikörper-Immunkomplexe für eine messbare Reaktion bereitstehen. Die nachweisbare biochemische Reaktion oder Fluoreszenz ist demnach eine mittelbare Folge des In-Kontakt-Bringens der pathogenen Substanz bzw. der Antigene mit den Nachweis-Antikörpern.

Diese Ausgestaltung des Verfahrens gibt es wiederum in zwei Alternativen. Bei der direkten Nachweismethode weisen die Nachweis-Antikörper jeweils unmittelbar ein Reportermolekül auf. In diesem Fall wird auch von einem enzymgekoppelten Nachweis-Antikörper gesprochen, welcher einerseits eingerichtet ist, direkt an das Antigen anzudocken und andererseits selbst das Reportermolekül trägt. Im Fall dieser alternativen Ausgestaltung des Verfahrens wird vorzugsweise nach dem Einleiten der Nachweis-Antikörper und vor dem Detektieren das Substrat in den Nachweisbereich eingeleitet.

Bei der indirekten Nachweismethode tragen die Nachweis-Antikörper die Reportermoleküle nicht selbst. Hierbei wird in einem weiteren Verfahrensschritt vorzugsweise nach dem Einleiten der Nachweis-Antikörper und vor dem Detektieren eine sekundäre Antikörper enthaltenden Flüssigkeit in den Nachweisbereich eingeleitet.

Die sekundären Antikörper tragen dann die Reportermoleküle. In diesem Fall wird auch von einem enzymgekoppelten sekundären Antikörper gesprochen. Dieses Verfahren hat den Vorteil, standardisierte sekundären Antikörperlösungen verwenden zu können. Im Fall dieser alternativen Ausgestaltung des Verfahrens wird vorzugsweise nach dem Einleiten der die sekundären Antikörper enthaltenden Flüssigkeit und vor dem Detektieren ein Substrat in den Nachweisbereich eingeleitet.

Dementsprechend sind die Nachweis-Antikörper bei der direkten Nachweismethode oder die sekundäre Antikörper bei der indirekten Nachweismethode mit Reportermolekülen gekoppelt und das Detektieren umfasst bei der direkten und bei der indirekten Nachweismethode bevorzugt das Messen einer Färbung oder das Messen von Lumineszenzstrahlung infolge einer biochemischen Reaktion der Reportermoleküle mit dem Substrat oder das Messen von Fluoreszenzstrahlung infolge der einer Exposition der Reportermoleküle mit einer Anregungsstrahlung.

Bevorzugt weist der Nachweisbereich eine Oberfläche mit immobilisierten Einfang-Antikörpern auf, wobei die Spülflüssigkeit beim Einleiten in den Nachweisbereich die Oberfläche mit den immobilisierten Einfang-Antikörpern benetzt. Die immobilisierten Einfang-Antikörper sind eingerichtet, an den Antigenen der nachzuweisenden pathogenen Substanz anzudocken und diese in dem Nachweisbereich festzuhalten.

Alternativ können die Nachweis-Antikörper auch auf Beads immobilisiert sein, welche mit der Spülflüssigkeit in dem Nachweisbereich zusammengeführt werden.

Vorzugsweise wird der Nachweisbereich nach dem Einleiten der aufgefangenen Spülflüssigkeit und/oder nach dem Einleiten der die Nachweis-Antikörper enthaltenden Flüssigkeit und/oder nach dem Einleiten der die sekundären Antikörper enthaltenden Flüssigkeit mit einem zweiten Volumen einer Spülflüssigkeit gespült.

Jeder dieser sogenannten Waschschritte dient insbesondere dazu, freie Nachweis-Antikörper und/oder Reportermoleküle, die nicht an ein Antigen gekoppelt sind aus dem Nachweisbereich zu entfernen, damit diese nicht zu einer Verfälschung des Messergebnisses beitragen.

Bevorzugt wird die aufgefangene Spülflüssigkeit und/oder das zweite Volumen der Spülflüssigkeit und/oder die Nachweis-Antikörper enthaltenden Flüssigkeit und/oder die sekundäre Antikörper enthaltenden Flüssigkeit in dem Nachweisbereich zirkuliert, hin- und herbewegt und/oder geschüttelt wird.

Jede dieser Formen der Agitation bewirkt eine Beschleunigung der (Bindungs-)Reaktionen in dem Nachweisbereich.

Weiterhin bevorzugt dreht sich die Zentrifuge im Betrieb um eine vertikal orientierte Rotationsachse (A), wobei beim Spülen des Spaltraums die Spülflüssigkeit wenigstens einmal im Spaltraum aufwärts und wieder abwärts transportiert wird.

Hierdurch passiert das erste Volumen der Spülflüssigkeit beim Spülen des Spaltraums mehrfach die Innenoberfläche der äußeren Umfangswand der Zentrifuge, was die Ausbeute der beim Spülen mitgerissenen Aerosolpartikel erhöht, ohne das erste Volumen der Spülflüssigkeit erhöhen zu müssen. Das erfindungsgemäße Verfahren hat hierdurch einen sehr geringen Verbrauch der Spülflüssigkeit, vorzugsweise im Bereich von 0,5 ml bis 4,0 ml, besonders bevorzugt von 1,0 ml bis 2,0 ml.

Realisiert wird dieser Spülvorgang vorzugsweise, indem der Spaltraum zwischen zwei um die Rotationsachse rotierbaren Umfangswänden der Zentrifuge ausgebildet ist, wobei die radial äußere Umfangswand eine Innenoberfläche mit einem sich in axialer Richtung von oben nach unten kontinuierlich verringernden Umfang aufweist und wobei das aufwärts Transportieren der Spülflüssigkeit durch Ausnutzung der Zentrifugalkraft während einer Rotation der Zentrifuge mit einer Drehzahl Z1 erfolgt. Dementsprechend erfolgt das abwärts Transportieren der Spülflüssigkeit bevorzugt durch Ausnutzung der Schwerkraft während einer Rotation der Zentrifuge mit einer Drehzahl Z2 < Z1.

Ebenfalls bevorzugt wird die Zentrifuge beim Auffangen der aus dem Spaltraum austretenden Spülflüssigkeit angehalten, wobei die Spülflüssigkeit nach unten aus dem Spaltraum herausfließt.

Vorteilhafter Weise ist ein Ventilatorelement, besonders bevorzugt ein Axialventilatorelement, mit der Zentrifuge rotatorisch gekoppelt, welches bei Drehung der Zentrifuge Luft durch den Spaltraum befördert.

Bevorzugt wird das erste Volumen der Spüllosung und/oder das zweite Volumen der Spüllosung und/oder die Nachweis-Antikorper enthaltende Losung und/oder die sekundare Antikorper enthaltende Losung aus dem Nachweisbereich in einen Sterilisationsbereich überführt und dort sterilisiert.

Weiterhin bevorzugt wird das erste Volumen der Spülflüssigkeit und/oder das zweite Volumen der Spülflüssigkeit und/oder die Nachweis-Antikorper enthaltende Losung und/oder die sekundäre Antikörper enthaltende Flüssigkeit nach dem Sterilisieren optional gefiltert und in ein Reservoir überführt und dort zur Wiederverwendung aufbewahrt.

Hierdurch wird, insbesondere solange keine Last pathogener Substanzen festgestellt wird, ein Kreislauf realisiert, der den Verbrauch an Spülflüssigkeit reduziert und die Betriebsdauer des Nachweisgeräts ohne Kartuschenwechsel erhöht.

Die Aufgabe wird gemäß einem zweiten Aspekt der Erfindung gelöst durch eine Zentrifuge nach Anspruch 8.

Die erfindungsgemäße Zentrifuge zur Verwendung in einem Nachweisgerät für den Nachweis in Luft enthaltener pathogener Substanzen, insbesondere Viren, weist auf:
- eine Rotationsachse,
- zwei um die Rotationsachse drehbare Umfangswände, wobei zwischen den Umfangswänden ein Spaltraum ausgebildet ist,
- ein Rotationsantrieb zur Erzeugung einer Rotationsbewegung der Umfangswände um die Rotationsachse,
- Mittel zum Durchleiten von Luft durch den Spaltraum,
- Mittel zum Einleiten einer Spülflüssigkeit in den Spaltraum und
- Mittel zum Auffangen der aus dem Spaltraum austretenden Spülflüssigkeit.

Die Rotationsachse ist bevorzugt vertikal ausgerichtet und eine radial äußere Umfangswand der zwei Umfangswände weist eine Innenoberfläche auf, derer Umfang sich in axialer Richtung von oben nach unten kontinuierlich verringert.

Hierdurch bekommt die Umfangswand auf ihrer Innenseite eine Konizität, die die Spülflüssigkeit bei Überschreiten Gleichgewichts-Zentrifugalkraft entgegen der Schwerkraft nach oben fließen lässt.

Vorteilhafter Weise weist die Innenoberfläche der radial außenliegenden Umfangswand in einer Schnittebene parallel zur Rotationachse betrachtet wenigstens einen Konuswinkel gegenüber der Vertikalen von 0,5 bis 5°, vorzugsweise von 1° bis 3° auf.

Diese Winkelbereiche haben sich in Kombination mit den für das effiziente Trennen der Aerosolpartikel benötigten Rotationsgeschwindigkeiten bzw. Zentrifugalkräften als praktikabel erwiesen, da vermieden werden muss, dass bereits die vergleichsweise kleinen Partikel beim Zentrifugieren nach oben aus der Zentrifuge heraus beschleunigt werden und gleichzeitig eine effiziente Spülung mit dem vergleichsweise großen ersten Volumen der Spülflüssigkeit möglich ist.

Bevorzugt weist die radial außenliegende Umfangswand der zwei Umfangswände eine wenigstens teilweise hydrophobe Innenoberfläche auf.

Diese Maßnahme begünstigt das Mitreißen der Aerosolpartikel von der Innenoberfläche und verringert das Volumen anhaftender Flüssigkeit nach dem Spülen des Spaltraums.

Ebenfalls bevorzugt weisen die Mittel zum Auffangen der aus dem Spaltraum austretenden Spülflüssigkeit eine hydrophobe Oberfläche auf.

Auch diese Maßnahme dient der Minimierung des Flüssigkeitsverlusts auf dem Weg in den Nachweisbereich.

Die Mittel zum Durchleiten von Luft durch den Spaltraum weisen vorzugsweise ein mit dem Rotationsantrieb rotatorisch gekoppeltes Ventilatorelement, insbesondere ein Axialventilatorelement auf, welches eingerichtet ist, bei Drehung der Zentrifuge Luft von einer Ansaugseite durch den Spaltraum zu befördern.

Auf diese wird der Lufttransport und das Trennverfahren in der Zentrifuge integriert und man benötig für das Erzeugen des Luftstroms durch die Zentrifuge beispielsweise keine zusätzliche Pumpe oder einen zusätzlichen Antrieb zu dem Rotationsantrieb der Zentrifuge.

Die Aufgabe wird gemäß einem dritten Aspekt der Erfindung gelöst durch ein Nachweisgerät nach Anspruch 12.

Das erfindungsgemäße Nachweisgerät für den Nachweis in Luft enthaltener pathogener Substanzen, insbesondere Viren, weist auf:
- einen Lufteinlass,
- einen Luftauslass,
- eine Zentrifuge gemäß dem zweiten Aspekt der Erfindung mit einem oder mehreren den vorstehend beschriebenen, vorteilhaften Merkmalen,
- einer Fluidleitung mit einem Nachweisbereich,
- eine die Mittel zum Auffangen und den Nachweisbereich verbindende Fluidleitung und
- ein Sensorelement, eingerichtet zum Detektieren einer Trübung und/oder Färbung und/oder Lumineszenz in dem Nachweisbereich.

Vorzugsweise weist das Nachweisgerät ein Gehäuse auf, welches den Lufteinlass und den Luftauslass definiert und in dem die Zentrifuge, die Fluidleitungen und das Sensorelementangeordnet sind.

Der Nachweisbereich weist bevorzugt eine Oberfläche mit immobilisierten Antikörpern auf.

Weiterhin bevorzugt umfasst das Nachweisgerät ein erstes Reservoir, in dem die Spülflüssigkeit vorgehalten wird, und eine das erste Reservoir mit dem Nachweisbereich verbindende Fluidleitung.

Bevorzugt umfasst das Nachweisgerät ferner ein zweites Reservoir, in dem eine Nachweis-Antikörper enthaltende Flüssigkeit vorgehalten wird, und eine das zweite Reservoir mit dem Nachweisbereich verbindende Fluidleitung.

Bevorzugt umfasst das Nachweisgerät ferner ein drittes Reservoir, in dem eine sekundäre Antikörper enthaltende Flüssigkeit vorgehalten wird, und eine das dritte Reservoir mit dem Nachweisbereich verbindende Fluidleitung.

Bevorzugt umfasst das Nachweisgerät ferner ein viertes Reservoir, in dem ein Substrat vorgehalten wird, und eine das vierte Reservoir mit dem Nachweisbereich verbindende Fluidleitung.

Ein vorteilhafte Ausgestaltung des Nachweisgeräts umfasst einen Sterilisationsbereich, der eingerichtet ist, die Spülflüssigkeit und/oder die Nachweis-Antikörper enthaltende Flüssigkeit und/oder die sekundäre Antikörper enthaltende Flüssigkeit zu sterilisieren, und eine den Sterilisationsbereich mit dem Nachweisbereich verbindende Fluidleitung.

Um einen Kreislauf zu ermöglichen, umfasst das Nachweisgerät vorzugsweise eine den Sterilisationsbereich mit dem ersten Reservoir verbindende Rückführleitung.

Die Rückführleitung weist bevorzugt einen mäanderförmigen Verlauf auf oder sie enthält bevorzugt Filtermittel oder sie weist besonders bevorzugt einen mäanderförmigen Verlauf auf und enthält Filtermittel.

Das Sensorelement ist vorteilhafter Weise ein optisches Sensorelement und ist optisch auf den Nachweisbereich ausgerichtet.

Das Nachweisgerät umfasst vorzugsweise ferner eine oder mehrere direkt oder indirekt auf das Sensorelement ausgerichtete Lichtquelle(n) zur Erzeugung einer Referenzstrahlung.

Mindestens eine der Fluidleitung weist bevorzugt eine Förderpumpe oder ein Sperrventil oder beides auf. Angesprochen sind hier - soweit in dem Nachweisgerät enthalten - die Fluidleitung mit dem Nachweisbereich, die die Mittel zum Auffangen und den Nachweisbereich verbindende Fluidleitung, die das erste Reservoir mit dem Nachweisbereich verbindende Fluidleitung, die den Sterilisationsbereich mit dem ersten Reservoir verbindende Rückführleitung, die das zweite Reservoir mit dem Nachweisbereich verbindende Fluidleitung, die das dritte Reservoir mit dem Nachweisbereich verbindende Fluidleitung und die das vierte Reservoir mit dem Nachweisbereich verbindende Fluidleitung.

Vorzugsweise weist das Nachweisgerät eine bevorzugt elektronische Steuerung auf, die mit dem Rotationsantrieb der Zentrifuge, und, soweit vorhanden, mit der einen oder den mehreren Förderpumpen und, soweit vorhanden, mit der einen oder den mehreren Sperrventilen mittels einer Signalverbindung verbunden und eingerichtet ist, das Nachweisgerät so anzusteuern, dass dieses das Verfahren gemäß dem ersten Aspekt der Erfindung ausführt.

Die Erfindung wird nachfolgend anhand von Zeichnungen näher erläutert. Es zeigen:
- Figur 1: eine schematische Darstellung eines Ausführungsbeispiels des erfindungsgemäßen Nachweisgeräts;
- Figur 2: eine Schnittdarstellung durch die erfindungsgemäße Zentrifuge;
- Figur 3: eine teilweise geschnittene Ansicht der erfindungsgemäßen Zentrifuge gemäß Figur 2;
- Figur 4: eine geschnittene perspektivische Ansicht der erfindungsgemäßen Zentrifuge gemäß Figur 2 von schräg unten und
- Figur 5: eine geschnittene perspektivische Ansicht der erfindungsgemäßen Zentrifuge gemäß Figur 2 von schräg oben.

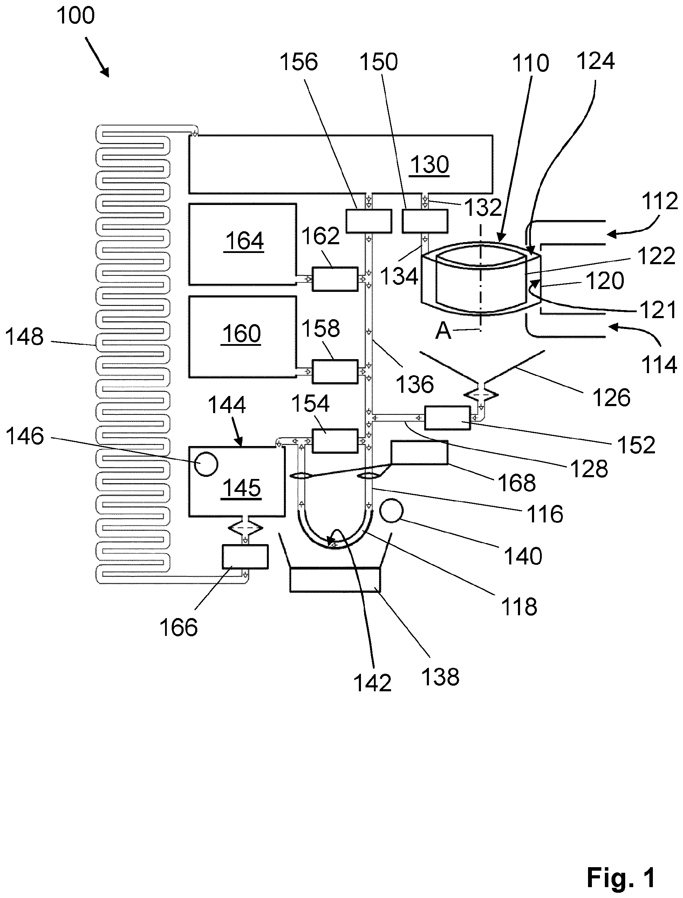

In Fig. 1 ist eine schematische Übersicht über die Komponenten des erfindungsgemäßen Nachweisgerätes 100 gezeigt. Dieses weist eine Zentrifuge 110, einen Lufteinlass 112, einen Luftauslass 114, eine erste Fluidleitung 116 mit einem Nachweisbereich 118 auf. Die Zentrifuge 110 definiert eine vertikale Rotationsachse A, und weist eine um die Rotationsachse A drehbare äußere Umfangswand 120 sowie hierzu konzentrische um die Rotationsachse A drehbare innere Umfangswand 122 auf. Zwischen der äußeren und der inneren Umfangswand ist ein Spaltraum 124 ausgebildet. Am unteren Ende des Spaltraumes weist die Zentrifuge Mittel 126 zum Auffangen einer aus dem Spaltraum 124 austretenden Spülflüssigkeit auf. Die Mittel 126 zum Auffangen und die Fluidleitung 116 bzw. der Nachweisbereich 118 sind durch eine zweite Fluidleitung 128 verbunden, durch die die aufgefangene Spülflüssigkeit in den Nachweisbereich 118 eingeleitet wird.

Die Spülflüssigkeit wird in einem ersten Reservoir oder Waschtank 130 aufbewahrt und gelangt zum Spülen des Spaltraumes 124 aus diesem über eine dritte Fluidleitung 132 und Mittel 134 zum Einleiten der Spülflüssigkeit in den Spaltraum 124 in die Zentrifuge 110. Ferner ist das erste Reservoir 130 über eine vierte Fluidleitung 136 direkt mit dem Nachweisbereich 116 verbunden.

Das Nachweisgerät 100 umfasst in Nachbarschaft zu dem Nachweisbereich 118 ein Sensorelement 138 sowie eine auf das Sensorelement 138 ausgerichtete Lichtquelle 140 zur Erzeugung einer Referenzstrahlung. Das Sensorelement 138 ist dementsprechend ein optisches Sensorelement, das optisch auf den Nachweisbereich 118 ausgerichtet ist.

Die Zentrifuge weist einen Rotationsantrieb (in Fig. 1 nicht gezeigt) zur Erzeugung einer Rotationsbewegung der Umfangswände 120, 122 um die Rotationsachse A auf. Ferner weist die Zentrifuge Mittel zum Erzeugen eines Luftstroms - in Fig. 1 ebenfalls nicht dargestellt - auf, der durch den Spaltraum 124 hindurch geleitet wird.

Im Nachweisbereich 118 weist die erste Fluidleitung 116 auf ihrer Innenseite eine Oberfläche 142 mit darauf immobilisierten Einfang-Antikörpern auf.

Das Nachweisgerät 100 weist einen Sterilisationsbereich 144 auf, welcher eingerichtet ist, die in diesen eingebrachte verbrauchte Flüssigkeit zu sterilisieren. Der Sterilisationsbereich 144 umfasst einen Sterilisationstank 145 und eine in dem Sterilisationstank angeordnete oder auf das Innere des Tanks ausgerichtete Lichtquelle 146, die eingerichtet ist, eine ionisierende Strahlung zu emittieren und den Tankinhalt zu bestrahlen. Die Lichtquelle ist beispielsweise eine UV-Lichtquelle.

Im Anschluss an den Sterilisationsbereich 144 weist das Nachweisgerät 100 eine Rückführleitung 148 auf, welche den Sterilisationsbereich 144 mit dem ersten Reservoir 130 fluidisch verbindet. Die Rückführleitung 148 ist mäanderförmig ausgebildet und dazu eingerichtet, in dem sterilisierten Fluid zurückbleibende Nachweis-Antikörper und/oder sekundäre Antikörper zurückzuhalten, bevor das Fluid in das erste Reservoir eingefüllt wird. Alternativ oder zusätzlich zu dem mäanderförmigen Verlauf kann die Rückführleitung auch Filtermittel zum Filtern des Fluids enthalten.

Anstelle eines solchen Sterilisationsbereichs 144 mit anschließender Rückführleitung 148 kann einfach auch ein Auffangbehälter vorgesehen sein, in dem die verbrauchte Flüssigkeit gesammelt wird und der ausgetauscht wird, beispielsweise wenn er einen bestimmten Füllstand erreicht hat oder wenn er über einen bestimmten Zeitraum in Betrieb war.

Das Nachweisgerät 100 gemäß Figur 1 weist eine Mehrzahl von Förderpumpen auf, welche mittels einer nicht dargestellten elektronischen Steuerung den Fluidstrom steuern, um die erfindungsgemäßen Verfahrensschritte auszuführen. Die Mehrzahl der Förderpumpen umfassen eine erste Förderpumpe 150 zum Fördern der Spülflüssigkeit aus dem ersten Reservoir oder Waschtank 130 in den Spaltraum 124 der Zentrifuge 110; eine zweite Förderpumpe 152 zum Fördern der in dem Mittel 126 aufgefangenen Spülflüssigkeit in die erste Fluidleitung 116 bzw. in den Nachweisbereich 118; eine dritte Förderpumpe 154 zum Zirkulieren des in dem Nachweisbereich 118 befindlichen Fluids; eine vierte Förderpumpe 156 zum direkten Einleiten der Spülflüssigkeit aus dem ersten Reservoir 130 in den Nachweisbereich 116; eine fünfte Förderpumpe 158 zum, Fördern einer Nachweis-Antikörper enthaltenden Flüssigkeit aus einem zweiten Reservoir 160 in den Nachweisbereich 116; eine sechste Förderpumpe 162 zum Fördern eines Substrats aus einem vierten Reservoir 164 in den Nachweisbereich 116 und eine siebte Förderpumpe 166 zum Fördern des sterilisierten Fluids aus dem Sterilisationstank 145 durch die Rückführleitung 148 zurück in den Waschtank 130.

Zur Fluidsteuerung weist das Nachweisgerät ferner eine Mehrzahl hier nicht dargestellter Ventile in den einzelnen Fluidleitungen auf, welche die jeweils genutzten Leitungswege öffnen und ungenutzte Leitungswege verschließen. Diese Ventile können als Rückschlagventile oder als aktive Ventile ausgebildet sein, welche ebenfalls von der elektronischen Steuerung angesteuert werden.

Das Nachweisgerät 100 weist schließlich ein Agitationsmittel 168 auf, welches eingerichtet ist, die den Nachweisbereich 118 umfassenden erste Fluidleitung 116 zu bewegen. Das Agitationsmittel 168 kann beispielsweise durch einen an dem ersten Fluidleitung mechanisch angreifenden Vibrationserzeuger (Schüttler) gebildet werden. Die Agitation kann dazu genutzt werden, eine Zirkulation des Fluids in der Fluidleitung 116 mit dem Nachweisbereich 118 zu unterstützen und so die im Nachweisbereich befindlichen Komponenten der Fluide, also den Antigenen, Antikörpern, Reportermolekülen und dem Substrat zu bewegen und die Wechselwirkungswahrscheinlichkeit zu erhöhen und damit schließlich die Reaktionsabläufe zu beschleunigen.

Mit dem Nachweisgerät gemäß Figur 1 lässt sich das erfindungsgemäße Verfahren mit den folgenden Schritten ausführen:
1. Die zu untersuchende Luft wird von dem Lufteinlass 112 durch den Spaltraum 124 der Zentrifuge 110 zum Luftauslass 114 durchgeleitet. Währenddessen rotiert die Zentrifuge 110 um die Rotationsachse A, sodass die in dem Spaltraum 124 befindliche Luft von den synchron rotierenden inneren und äußeren Umfangswänden 120, 122 mitgenommen und ebenfalls in eine Drehbewegung versetzt wird. In der zu untersuchenden Luft befindliche Aerosolpartikel werden aufgrund der Zentrifugalkraft unter Ausnutzung der Massenträgheit nach außen beschleunigt und auf einer Innenoberfläche 121 der radial äußeren Umfangswand 120 angereichert.
2. Im Anschluss wird ein erstes Volumen der Spülflüssigkeit mittels der ersten Förderpumpe 150 aus den Waschtank 130 in den Spaltraum 124 eingeleitet. Die Spülflüssigkeit reißt dabei die Aerosolpartikel von der Innenoberfläche 121 der äußeren Umfangswand 120 mit. Zur Unterstützung des Spülvorgangs dreht sich Zentrifuge 110 mit verminderter Geschwindigkeit weiter, sodass auch die Spülflüssigkeit entlang der Innenoberfläche 121 der äußeren Umfangswand 120 fließt. Die Rotationsgeschwindigkeit der Zentrifuge 110 wird vorzugsweise variiert, wodurch im Zusammenwirken mit einer konisch von oben nach unten verjüngten Ausbildung der Innenoberfläche 121 die in dem Spaltraum befindliche Spülflüssigkeit auf- und ab bewegt wird.
3. Im Anschluss an den Spülvorgang wird die Zentrifuge angehalten, sodass die Spülflüssigkeit aus dem Spaltraum austritt und in dem Mittel 126 aufgefangen und von dort mittels der zweiten Förderpumpe 152 in den Nachweisbereich 118 eingeleitet wird.
4. In der ersten Fluidleitung 116 mit dem Nachweisbereich 118 wird die Spülflüssigkeit mittels der dritten Förderpumpe 154 zirkuliert. Liegt eine Kontamination der zu untersuchenden Luft vor, koppeln in diesem Schritt die in der Spülflüssigkeit mitgeführten Antigene an den auf der Oberfläche 142 des Nachweisbereichs 118 immobilisierten Antikörpern an und werden hier festgehalten. Durch das Zirkulieren wird die Andockwahrscheinlichkeit erhöht und dadurch eine höhere Ausbeute trotz einem geringen ersten Volumen der Spülflüssigkeit erzielt. Um eine nochmals effizientere Reaktion zu erzielen kann die erste Fluidleitung 116 und mit dieser der Nachweisbereich mithilfe des Agitationsmittels 168 zusätzlich bewegt werden.
5. Im Anschluss wird der Nachweisbereich 118 durch Betätigung der vierten Förderpumpe 156 mittels eines zweiten Volumens einer Spülflüssigkeit aus dem Waschtank 130 in den Sterilisationstank 145 ausgespült und so von den nicht eingefangenen Aerosolpartikeln befreit. Auch in diesem Schritt kann die Spülflüssigkeit zunächst mittels der Förderpumpe 154 in der Fluidleitung 116 des Nachweisbereichs 118 unterstützend zirkuliert und die erste Fluidleitung 116 mithilfe des Agitationsmittels 168 bewegt werden, wodurch die Spülwirkung auch bei einem geringem zweiten Volumen der Spülflüssigkeit hoch ist.
6. Darauffolgenden wird mittels der fünften Förderpumpe 158 eine Nachweis-Antikörper enthaltenden Flüssigkeit aus dem zweiten Reservoir 160 in den Nachweisbereich 118 eingeleitet. Wieder kann die Flüssigkeit in dem Nachweisbereich 118 anschießend mittels der dritten Förderpumpe 154 zur Unterstützung der Reaktion zirkuliert und zur weiteren Unterstützung der Reaktion das Agitationsmittel 168 eingesetzt werden. In diesem Prozessschritt koppeln die Nachweis-Antikörper an den in dem Nachweisbereich 118 festgehaltenen Antigenen an. An die Nachweis-Antikörper sind direkt Reportermoleküle oder Marker angedockt. Es handelt sich also bei dem hier beschriebenen Prozess um eine direkte Nachweismethode.
7. Anschließend wird der fünfte Schritt (Spülschritt) wiederholt.
8. Im Anschluss hieran wird die Referenzlichtquelle 140 aktiviert, um den optischen Sensor 138 zu kalibrieren. Hierbei wird ein erstes Referenzsignal erzeugt und an eine Auswerteeinheit übermittelt.
9. Im darauffolgenden Schritt wird mittels der sechsten Förderpumpe 162 ein Substrat aus dem vierten Reservoir 164 in den Nachweisbereich 118 eingeleitet. Wieder kann die Flüssigkeit in dem Nachweisbereich 118 anschießend mittels der dritten Förderpumpe 154 zur Unterstützung der Reaktion zirkuliert und zur weiteren Unterstützung der Reaktion das Agitationsmittel 168 eingesetzt werden. Hierbei findet eine Reaktion des Substrats mit den Reportermolekülen statt, in deren Folge die Reportermoleküle ein Lumineszenzlicht aussenden, welches mittels des Lichtsensors 138 erfasst wird. Das Messignal wird dann ebenfalls an die Auswerteeinheit übermittelt.
10. Hiernach kann der Schritt 8 erneut ausgeführt und ein zweites Referenzsignal erzeugt und an die Auswerteeinheit übermittelt werden. Im Grunde genügt einer der beiden Kalibrierungsschritte 8 und 10. Eine vor und nach der eigentlichen Messung (Schritt 9) durchgeführte Kalibrierungsmessung erhöht die Genauigkeit im Hinblick auf Signaldrifts aufgrund veränderlicher Umgebungsbedingungen wie beispielsweise aufgrund thermischer Einflüsse.
11. Anschließend wird der fünfte Schritt (Spülschritt) wiederholt.
12. Wahlweise nach jedem der Spülschritte 5, 7 und 11 und jedenfalls nach dem 11. Schritt wird der Inhalt des Sterilisationstanks 145 mittels der Strahlungsquelle 146 bestrahlt und so der Inhalt sterilisiert.
13. Im Anschluss hieran wird mittels der siebten Förderpumpe 166 der Inhalt des Sterilisationstanks 145 durch die Rückführleitung 148 zurück in den Waschtank 130 gepumpt,
14. Das erste Referenzsignal aus Schritt 8, das Messignal aus Schritt 9 und das zweite Referenzsignal aus Schritt 10 werden mittels der Auswerteeinheit des Nachweisgeräts qualitativ und vorzugsweise quantitativ ausgewertet. Aufgrund einer definierten Prozessführung mit bekanntem untersuchtem Luftvolumen kann das Nachweisgerät einen Absolutwert für die gemessenen Virenlast ermitteln und diesen Absolutwert selbst und/oder das Überschreiten eines Schwellwerts optisch und/oder akustisch anzeigen und/oder mittels Datenübertragungsmodul auf ein entferntes Gerät übertragen.

Das vorstehend beschrieben Verfahren umfasst einen Messzyklus. Das erfindungsgemäße Nachweisgerät ist eingerichtet mehrerer solcher Messzyklen in einer zeitlich definierten Abfolge und/oder getriggert durch äußere Signale auszuführen und so beispielsweise eine quasi-kontinuierliche Raumluftüberwachung durchzuführen.

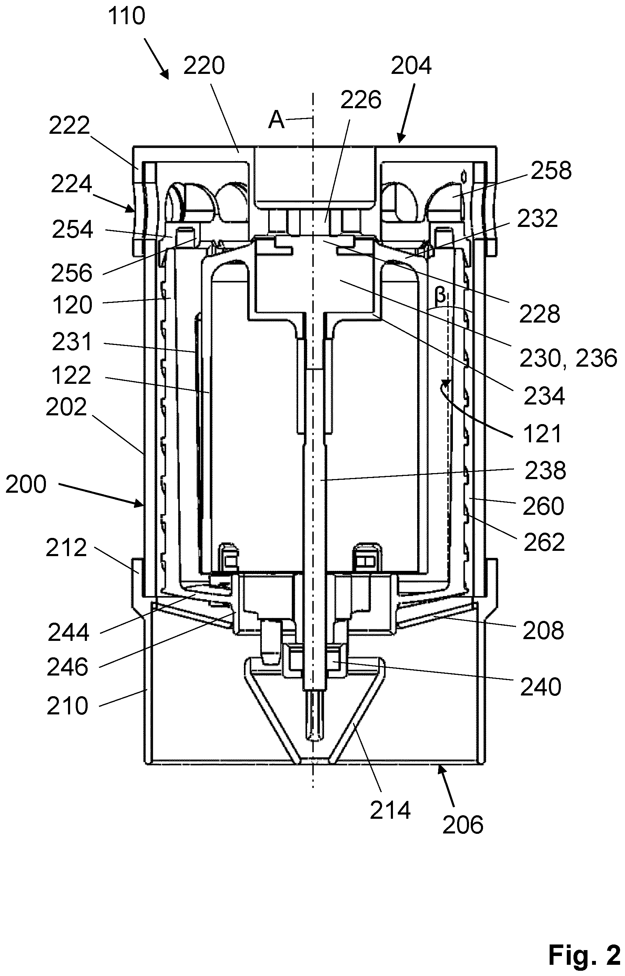

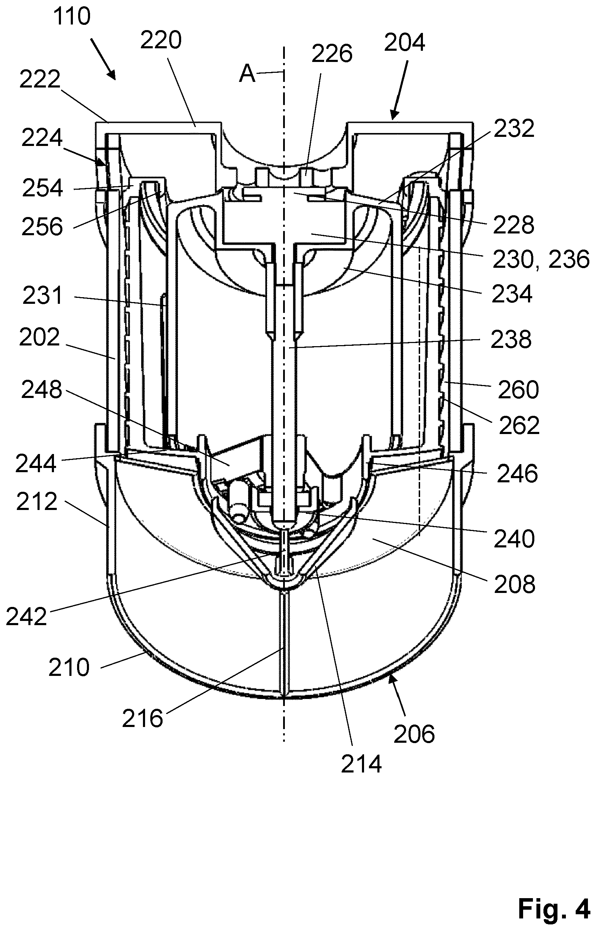

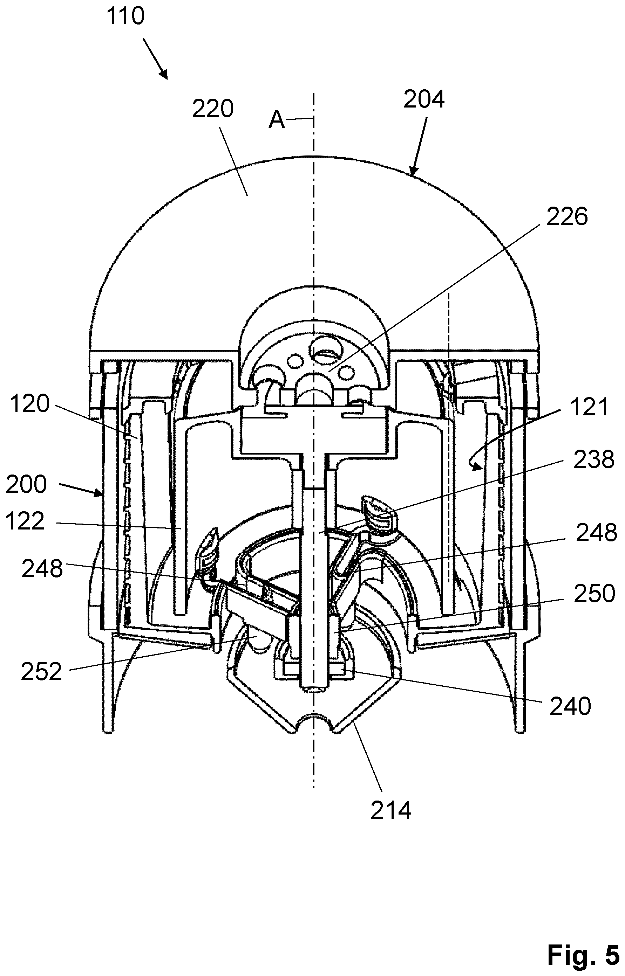

Die Figuren 2 bis 5 zeigen ein Ausführungsbeispiel der erfindungsgemäßen Zentrifuge 110 in verschiedenen Ansichten und Schnitten.

Die Zentrifuge weist eine vertikal ausgerichtete Rotationsachse A auf. Um die Rotationsachse herum ist radial außen ein statisches Zentrifugengehäuse 200 mit einer Gehäuseumfangswand 202, einem Gehäusedeckel 204 und einem Gehäusesockel 206 angeordnet. Der Gehäusesockel umfasst eine Gehäusebodenwand 208 einen Sockelzylinder 210, einen sich an den Sockelzylinder 210 axial anschließenden Verbindungsringabschnitt 212 zur Verbindung mit der Gehäuseumfangswand 202 und ein innerhalb des Sockelzylinders 210 und unterhalb der Gehäusebodenwand 208 angeordneten Trichter 214. Der Trichter 214 ist mittels mehrerer Stege 216 mit der Gehäuseumfangswand 202 verbunden. Er ist Teil der Mittel zum Auffangen der aus dem Spaltraum austretenden Spülflüssigkeit.

Der Gehäusedeckel 204 umfasst eine Gehäusedeckelwand 220 und einen Verbindungsringabschnitt 222 zur Verbindung mit der Gehäuseumfangswand 202. In dem Verbindungsringabschnitt 222 und in dem axialen Abschnitt der Gehäuseumfangswand 202, mit dem dieser in Verbindung steht, ist umfänglich eine Reihe von Durchgangslöchern 224 angeordnet, welche den Lufteinlass der Zentrifuge 110 bilden.

In der Mitte ist die Gehäusedeckelwand nach innen eingesenkt. Hier weist sie einen Flansch 226 zur Befestigung eines Motorflansches 228 des Antriebsmotors 230 auf. Der Antriebsmotor 230 ist unter anderem neben einer nicht dargestellten Motorsteuerung Teil des Rotationsantriebs.

Alle im Folgenden beschriebenen Bauteile der Zentrifuge 110 sind gegenüber dem Zentrifugengehäuse 200 drehbar. Hierzu zählen die bereits erwähnte, um die Rotationsachse A drehbare äußere Umfangswand 120 und die innere Umfangswand 122, welche mechanisch miteinander gekoppelt sind, so dass sie sich synchron drehen und relativ zueinander nicht bewegen.

Zwischen der äußeren Umfangswand 120 und der inneren Umfangswand 122 ist besagter Spaltraum 124 ausgebildet. Damit die in dem Spaltraum 124 befindliche Luft von den synchron rotierenden inneren und äußeren Umfangswänden 120, 122 effizient mitgenommen werden kann und möglichst schnell die Rationsgeschwindigkeit der Umfangswände aufnimmt, sind in dem Spaltraum 124 die äußere Umfangswand 120 mit der inneren Umfangswand 122 verbindende, im Wesentlichen vertikal orientierte Barrieren 231 angeordnet.

Die Innenoberfläche 121 der radial äußere Umfangswand 120 weist eine konische Geometrie auf, wobei derer Umfang sich in axialer Richtung von oben nach unten kontinuierlich verringert. Der Konuswinkel β zwischen der inneren Umfangswand 122 und der Vertikalen in der in Figur 2 dargestellten Schnittebene parallel zur Rotationachse A beträgt vorzugsweise 0,5° bis 5°, besonders bevorzugt 1° bis 3°. Die Innenoberfläche 121 ist bevorzugt wenigstens teilweise und besonders bevorzugt vollständig hydrophob ausgebildet.

An die innere Umfangswand 122 schließt sich als oberer Abschluss eine Deckelwand 232 mit einer zentralen Motoraufnahme 234 an. In der Motoraufname 234 ist der Antriebmotor 230 mit seinem drehenden Gehäuse 236 abschnitt fixiert. Wird der Antriebsmotor in Rotation versetzt, dreht sich also das Gehäuse 236 relativ zu dem Motorflansch 228 und damit die innere Umfangswand 122 zusammen mit der äußeren Umfangswand 120 relativ zu dem Zentrifugengehäuse 200 um die Rotationsachse A. Aus der Deckelwand 232 ragt eine mit dem Antriebsmotor verbunden Welle 238 in Richtung der Gehäusebodenwand 208. An ihrem unteren, dem Motor entgegengesetzten Ende ist die Welle 238 mittels eines Lagerelements 240 zentral drehbar gelagert. Das Lagerelement 240 ist wiederum über mehrere Stege 242 an dem nicht mitdrehenden Trichter 214 abgestützt.

An die äußere Umfangswand 120 schließt sich als unterer Abschluss ein ringförmiger Bodenwandabschnitt 244 an. Der Bodenwandabschnitt 244 ragt radial einwärts ausgehend von der äußeren Umfangswand 120 bis unter der innere Umfangswand 122 hindurch und ist an seinem radial inneren Rand von einem sich axial nach oben erstreckenden Wandabschnitt 246 begrenzt. Der Wandabschnitt 246 ist an mehreren umfänglichen Positionen unterbrochen, von welchen aus Kanäle 248 zum Zentrum der Zentrifuge führen. An ihrem zentrumsnahen Ende laufen die Kanäle in einem Stützring 250 zusammen, der fest auf der Welle 238 fixiert ist. Auf der Unterseite der weisen die Kanäle jeweils einen Auslass 252 auf. Die Auslässe 252 münden allesamt in dem Trichter 214. Der Bodenwandabschnitt 244 hat von außen radial einwärts ein Gefälle, so dass die Spülflüssigkeit bei Stillstand der Zentrifuge in Richtung des Wandabschnitts 246 fließt. Ein weiteres Gefälle in Umfangsrichtung auf Segmenten des Bodenwandabschnitt 244 sorgt dafür, dass die Spülflüssigkeit bei Stillstand der Zentrifuge 110 ferner in Richtung der Kanäle 248 fließt, welche ihrerseits ein Gefälle in Richtung der Auslassöffnungen aufweisen.

Der Bodenwandabschnitt 244, die Kanäle 248 und der Auslass 252 sind wie der Trichter 214 Teile der Mittel zum Auffangen der aus dem Spaltraum austretenden Spülflüssigkeit. Diese Mittel weisen vorzugsweise alle wenigstens teilweise eine hydrophobe Oberfläche auf, wobei im Grunde genügt, wenn nur die Oberflächen hydrophobisiert sind, welche mit der Spülflüssigkeit in Berührung kommen. Dies sind sie Oberseite des Bodenwandabschnitts 244, die Innenflächen der Kanäle 248, die Oberfläche der Auslassöffnungen in den Auslässen 252 und die Innenseite des Trichters 214.

An die äußere Umfangswand 120 schließt sich als oberer Abschluss ein ringförmiger Deckenwandabschnitt 254 an. Der Deckenwandabschnitt 244 ragt radial einwärts ausgehend von der äußeren Umfangswand 120, überdeckt nahezu den gesamten Spaltraum 124 und weist an seine radial inneren Rand einen axial nach unten verlaufenen Wandabschnitt 256 auf. Der Deckenwandabschnitt 254 verhindert aufgrund dieser Ausgestaltung das Austreten der Spülflüssigkeit beim Zentrifugieren aus dem Spaltraum 124 nach oben.

Auf seiner Oberseite weist der Wandabschnitt 256 mehrere Luftschaufeln 258 auf, welche der Gestalt angeordnet sind, dass sie bei Drehung der Zentrifuge 110 auf der Innenseite der Gehäuseumfangswand 202 an den Durchgangslöchern 224 vorbeistreichen. Die Geometrie der Luftschaufeln ist so gewählt, dass diese in Verbindung mit der Geometrie der Durchgangslöchern 224 einen definierten Volumenstrom von außerhalb des Zentrifugengehäuses 200 angesaugter Luft erzeugen und durch den Spaltraum 124 fördern. Die Luftschaufeln 258 und die Durchgangslöcher 224 bilden zusammen die Mittel zum Durchleiten von Luft durch den Spaltraum 124, während die Luftschaufeln 258 allein das mit dem Rotationsantrieb rotatorisch gekoppelte Ventilatorelement bilden.

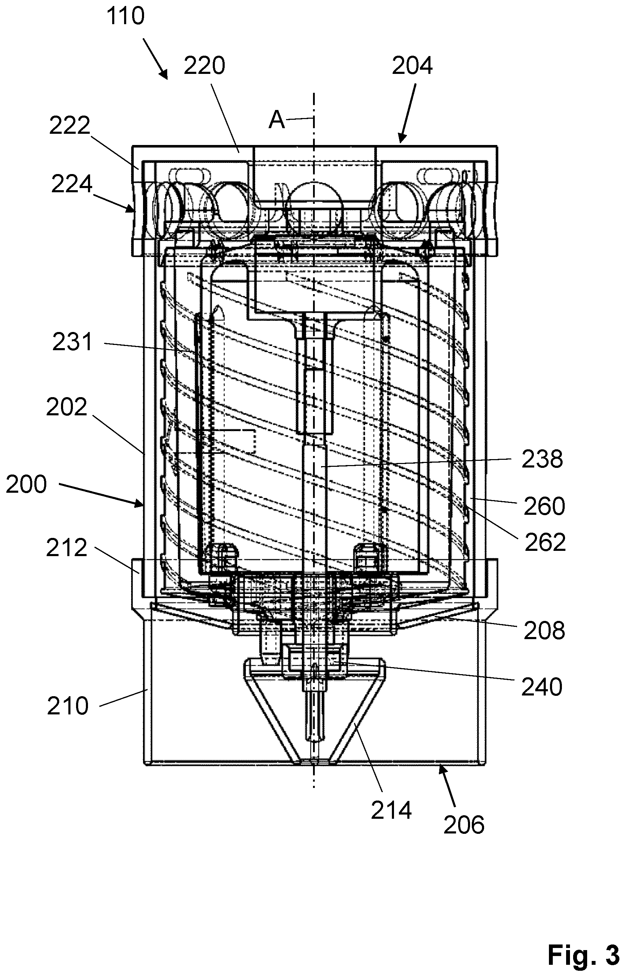

Um eine unkontrollierte Gegenströmung in dem Spalt 260 zwischen der Außenseite der radial äußeren Umfangswand 120 und der Innenseite der Gehäuseumfangswand 202 zu verhindern, ist auf der Außenseite der radial äußeren Umfangswand 120 eine Gewindestruktur 262 aufgebracht, die eine axial abwärts gerichtete Strömung und dadurch für einen Druckausgleich am unteren Ende der Zentrifuge sorgt, in Figur 3 als unsichtbare Kanten dargestellt.

Als Mittel zum Einleiten der Spülflüssigkeit in den Spaltraum 124 weist die Zentrifuge eine Öffnung in dem Gehäusedeckel 124, die in radialer Richtung zwischen der Einsenkung und dem inneren Rand des Deckenwandabschnitts 254 angeordnet ist. Von dieser Öffnung aus fließt die Spülflüssigkeit auf die radial auswärts schräg nach unten geneigte Deckelwand 232 und dann in den Spaltraum.

### Bezugszeichenliste

- 100: Nachweisgerät
- 110: Zentrifuge
- 112: Lufteinlass
- 114: Luftauslass
- 116: erste Fluidleitung
- 118: Nachweisbereich
- 120: äußere Umfangswand
- 121: Innenoberfläche der äußeren Umfangswand
- 122: innere Umfangswand
- 124: Spaltraum
- 126: Mittel zum Auffangen
- 128: zweite Fluidleitung
- 130: erstes Reservoir
- 132: dritte Fluidleitung
- 134: Mittel zum Einleiten
- 136: vierte Fluidleitung
- 138: Sensorelement
- 140: Lichtquelle
- 142: Oberfläche
- 144: Sterilisationsbereich
- 145: Sterilisationstank
- 146: Lichtquelle
- 148: Rückführleitung
- 150: erste Förderpumpe
- 152: zweite Förderpumpe
- 154: dritte Förderpumpe
- 156: vierte Förderpumpe
- 158: fünfte Förderpumpe
- 160: zweites Reservoir
- 162: sechste Förderpumpe
- 164: viertes Reservoir
- 166: siebte Förderpumpe
- 168: Agitationsmittel

- 200: Zentrifugengehäuse
- 202: Gehäuseumfangswand
- 204: Gehäusedeckel
- 206: Gehäusesockel
- 208: Gehäusebodenwand
- 210: Sockelzylinder
- 212: Verbindungsringabschnitt
- 214: Trichter
- 216: Steg
- 220: Gehäusedeckelwand
- 222: Verbindungsringabschnitt
- 224: Durchgangsloch, Lufteinlass der Zentrifuge
- 226: Flansch
- 228: Motorflansches
- 230: Antriebsmotor
- 231: Barriere
- 232: Deckelwand
- 234: Motoraufname
- 236: Gehäuse des Antriebsmotors
- 238: Welle
- 240: Lagerelement
- 242: Steg
- 244: Bodenwandabschnitt
- 246: axialer Wandabschnitt
- 248: Kanal
- 250: Stützring
- 252: Auslass
- 254: Deckenwandabschnitt
- 256: Wandabschnitt
- 258: Luftschaufel
- 260: Spalt
- 262: Gewindestruktur

## Patentansprüche

1. Verfahren zum Nachweis in Luft enthaltener pathogener Substanzen aufweisend:
Durchleiten von Luft durch einen Spaltraum (124) einer Zentrifuge (110), Zentrifugieren der durchgeleiteten Luft,
Spülen des Spaltraums (124) mittels eines ersten Volumens einer Spülflüssigkeit,
Auffangen der aus dem Spaltraum (124) austretenden Spülflüssigkeit, Einleiten der aufgefangenen Spülflüssigkeit in einen Nachweisbereich (118), Detektieren einer Trübung und/oder Färbung und/oder Lumineszenz in dem Nachweisbereich (118) in Abhängigkeit von der Präsenz wenigstens einer pathogenen Substanz und mittelbar oder unmittelbar infolge eines In-Kontakt-Bringens derselben mit Nachweis-Antikörpern.

2. Verfahren nach Anspruch 1,
**dadurch gekennzeichnet,**
**dass** der Nachweisbereich (118) eine Oberfläche (142) mit immobilisierten Einfang-Antikörpern aufweist, wobei die Spülflüssigkeit im Nachweisbereich (118) die Oberfläche (142) mit den immobilisierten Einfang-Antikörpern benetzt.

3. Verfahren nach einem der vorstehenden Ansprüche,
**dadurch gekennzeichnet,**
**dass** der Nachweisbereich (118) nach dem Einleiten der aufgefangenen Spülflüssigkeit und/oder nach dem Einleiten der die Nachweis- Antikörper enthaltenden Flüssigkeit und/oder nach dem Einleiten der die sekundären Antikörper enthaltenden Flüssigkeit mit einem zweiten Volumen einer Spülflüssigkeit gespült wird.

4. Verfahren nach einem der vorstehenden Ansprüche,
**dadurch gekennzeichnet,**
**dass** das die aufgefangene Spülflüssigkeit und/oder das zweite Volumen der Spülflüssigkeit in dem Nachweisbereich (118) zirkuliert, hin- und herbewegt und/oder geschüttelt wird.

5. Verfahren nach einem der vorstehenden Ansprüche,
**dadurch gekennzeichnet,**
**dass** sich die Zentrifuge (110) im Betrieb um eine vertikal orientierte Rotationsachse (A) dreht, wobei beim Spülen des Spaltraums (124) die Spülflüssigkeit wenigstens einmal im Spaltraum (124) aufwärts und wieder abwärts transportiert wird.

6. Verfahren nach Anspruch 5,
**dadurch gekennzeichnet,**
**dass** der Spaltraum (124) zwischen zwei um die Rotationsachse (A) rotierbaren Umfangswänden der Zentrifuge (110) ausgebildet ist, wobei eine radial äußere Umfangswand (120) eine Innenoberfläche (121) mit einem sich in axialer Richtung von oben nach unten kontinuierlich verringernden Umfang aufweist und wobei das aufwärts Transportieren der Spülflüssigkeit durch Ausnutzung der Zentrifugalkraft während einer Rotation der Zentrifuge (110) mit einer Drehzahl Z1 erfolgt.

7. Verfahren nach Anspruch 6,
**dadurch gekennzeichnet,**
**dass** das abwärts Transportieren der Spülflüssigkeit durch Ausnutzung der Schwerkraft während einer Rotation der Zentrifuge (110) mit einer Drehzahl Z2 < Z1 erfolgt.

8. Zentrifuge (110) zur Verwendung in einem Nachweisgerät (100) für den Nachweis in Luft enthaltener pathogener Substanzen, insbesondere Viren, aufweisend:
eine Rotationsachse (A),
zwei um die Rotationsachse (A) drehbare Umfangswände (120, 122), wobei zwischen den Umfangswänden (120, 122) ein Spaltraum (124) ausgebildet ist, ein Rotationsantrieb zur Erzeugung einer Rotationsbewegung der Umfangswände (120, 122) um die Rotationsachse (A),
Mittel zum Durchleiten von Luft durch den Spaltraum (124),
Mittel (134) zum Einleiten einer Spülflüssigkeit in den Spaltraum (124) und
Mittel (126) zum Auffangen der aus dem Spaltraum (124) austretenden Spülflüssigkeit.

9. Zentrifuge (110) nach Anspruch 8,
**dadurch gekennzeichnet,**
**dass** die Rotationsachse (A) vertikal ausgerichtet ist und dass eine radial äußere Umfangswand (120) der zwei Umfangswände (120, 122) eine Innenoberfläche (121) aufweist, derer Umfang sich in axialer Richtung von oben nach unten kontinuierlich verringert.

10. Zentrifuge (110) nach Anspruch 9,
**dadurch gekennzeichnet,**
**dass** die Innenoberfläche (121) der radial außenliegenden Umfangswand (120) in einer Schnittebene parallel zur Rotationachse (A) betrachtet wenigstens einen Konuswinkel (β) gegenüber der Vertikalen von 0,5 bis 5°, vorzugsweise von 1° bis 3° aufweist.

11. Zentrifuge (110) nach einem der Ansprüche 8 bis 10,
**dadurch gekennzeichnet,**
**dass** die Mittel zum Durchleiten von Luft durch den Spaltraum (124) ein mit dem Rotationsantrieb rotatorisch gekoppeltes Ventilatorelement aufweisen, welches eingerichtet ist, bei Drehung der Zentrifuge (110) Luft durch den Spaltraum (124) zu befördern.

12. Nachweisgerät (100) für den Nachweis in Luft enthaltener pathogener Substanzen, insbesondere Viren, aufweisend:
einen Lufteinlass (112),
einen Luftauslass (114),
eine Zentrifuge (110) nach einem der Ansprüche 8 bis 11,
eine erste Fluidleitung (116) mit einem Nachweisbereich (118),
eine die Mittel (126) zum Auffangen und den Nachweisbereich (118) verbindende zweite Fluidleitung (128) und
ein Sensorelement (138), eingerichtet zum Detektieren einer Trübung und/oder Färbung und/oder Lumineszenz in dem Nachweisbereich (118).

13. Nachweisgerät (110) nach Anspruch 12,
**gekennzeichnet durch**
ein erstes Reservoir (130), in dem eine Spülflüssigkeit vorgehalten wird, eine das erste Reservoir (130) mit den Mittel (134) zum Einleiten verbindende dritte Fluidleitung (136) und eine das erste Reservoir (130) mit dem Nachweisbereich (118) verbindende vierte Fluidleitung (136).

14. Nachweisgerät (110) nach einem der Ansprüche 12 oder 13,
**gekennzeichnet durch**
einen Sterilisationsbereich (144), eingerichtet die Spülflüssigkeit und/oder eine Nachweis-Antikörper enthaltende Flüssigkeit und/oder eine sekundäre Antikörper enthaltende Flüssigkeit und/oder ein Substrat zu sterilisieren, und eine den Sterilisationsbereich mit dem Nachweisbereich (118) verbindende Fluidleitung.

15. Nachweisgerät (110) nach Anspruch 13 und Anspruch 14,
**gekennzeichnet durch**
eine den Sterilisationsbereich (144) mit dem ersten Reservoir (130) verbindende Rückführleitung (148).
